Europäisches Patentamt

European Patent Office

Office européen des brevets

(11) Numéro de publication: **0 251 837**
A2

(12) **DEMANDE DE BREVET EUROPEEN**

(21) Numéro de dépôt: **87401196.8**

(22) Date de dépôt: **27.05.87**

(51) Int. Cl.⁴: **F 16 K 31/20**
**F 16 K 31/58**

(30) Priorité: **29.05.86 FR 8607718**

(43) Date de publication de la demande:
**07.01.88 Bulletin 88/01**

(84) Etats contractants désignés:
**AT BE CH DE ES FR GB IT LI NL SE**

(71) Demandeur: **Girouard, Alain**
**18, boulevard Jean-Jacques Rousseau**
**F-92230 Gennevilliers (FR)**

(72) Inventeur: **Girouard, Alain**
**18, boulevard Jean-Jacques Rousseau**
**F-92230 Gennevilliers (FR)**

(74) Mandataire: **Sauvage, Renée**
**Cabinet Sauvage 100 bis, avenue de Saint-Mandé**
**F-75012 Paris (FR)**

(54) **Dispositif de remplissage et de fermeture hydraulique pour réservoir de chasse d'eau.**

(57) Un clapet (18) interposé entre l'alimentation générale et le réservoir de chasse d'eau est ouvert sous l'effet du poids d'un récipient (26) interposé entre ledit clapet et le réservoir, et par l'intermédiaire duquel se fait le remplissage dudit réservoir. L'équilibrage du poids du récipient (26) par la poussée d'Archimède de l'eau recueillie dans le réservoir annule l'effet du récipient (26) sur le clapet (18) et autorise la fermeture de ce dernier. Le clapet (18) est tronconique et il pivote autour d'un point fixe (22) qui est le point de contact entre le siège (14) du clapet et la jonction entre l'une des génératrices (21) du tronc de cône et la grande base de ce dernier.

FIG 2

EP 0 251 837 A2

## Description

Dispositif de remplissage et de fermeture hydraulique pour réservoir de chasse d'eau.

La présente invention a pour objet un dispositif de remplissage et de fermeture hydraulique pour réservoir de chasse d'eau comprenant des moyens de raccordement au réseau d'alimentation en eau, des moyens d'acheminement de l'eau vers le réservoir, un clapet interposé entre les moyens de raccordement et les moyens d'acheminement, et des moyens de déplacement dudit clapet entre une position d'ouverture et une position de fermeture, et réciproquement.

Dans les dispositifs actuellement connus, on utilise un flotteur monté à l'extrémité d'un bras de levier pivotant et dont l'extrémité opposée, qui a un déplacement dans le sens contraire de celui du flotteur, vient ouvrir ou fermer le clapet. Comme on le sait, lorsque l'on tire la chasse d'eau le flotteur s'abaisse puisqu'il repose à la surface de l'eau qui s'écoule, tandis que s'ouvre le clapet. Inversement, au fur et à mesure que le réservoir se remplit, le flotteur qui repose à la surface de l'eau revient en position haute et le clapet se ferme.

Ce système, largement répandu, a de nombreux inconvénients.

En particulier, en cas de fuite légère, la surface libre de l'eau dans le réservoir, et par conséquent le flotteur, n'atteignent jamais la hauteur voulue pour fermer le clapet et il s'ensuit une alimentation continuelle du réservoir, avec le bruit désagréable et la consommation d'eau que cela entraîne.

Par ailleurs, lorsque le système fonctionne convenablement, la fermeture du clapet ne se fait que progressivement et il s'ensuit, au fur et à mesure des variations de débit, des variations de bruit de remplissage pouvant aller jusqu'à des sifflements gênants.

La présente invention a pour but de remédier à ces inconvénients en apportant un dispositif qui soit fiable, peu bruyant, et à fermeture instantanée.

Ces objectifs sont atteints par l'invention en ce sens que, dans le dispositif qu'elle propose, les moyens de déplacement du clapet sont constitués par un couple de tringles articulées entre elles et dont l'extrémité opposée à l'articulation porte, pour l'une des tringles, le clapet et, pour l'autre, un récipient ouvert à sa partie supérieure et mobile entre une position haute et une position basse, et réciproquement, le passage de l'une à l'autre position entraînant, par l'intermédiaire du couple de tringles articulées, la fermeture et l'ouverture du clapet, et réciproquement, les moyens d'acheminement plongeant dans le récipient de sorte que le réservoir est rempli principalement par débordement dudit récipient et accessoirement par un orifice de fuite prévu à une hauteur intermédiaire du récipient, correspondant à un niveau de remplissage minimal de ce dernier, le passage de la position basse à la position haute du récipient résultant de l'atteinte de l'équilibre entre la poussée d'Archimède exercée sur celui-ci par l'eau recueillie dans le réservoir et le poids du récipient rempli d'eau, et le passage de la position haute à la position basse du récipient résultant de la vidange du réservoir et de la vidange partielle du récipient jusqu'au niveau de son orifice de fuite.

Plus précisément, lorsque le réservoir est vide, il reste toujours un volume d'eau minimum dans le récipient et le poids du récipient ainsi chargé d'eau exerce, par l'intermédiaire du couple de tringles, une force sur le clapet qui le fait passer de sa position fermée à sa position ouverte. Lorsque le réservoir se remplit, la poussée d'Archimède qui s'exerce sur la récipient finit par être égale au poids du récipient et de son contenu et il s'ensuit que tout se passe comme si le récipient n'existait plus. La force d'ouverture qui s'exerçait sur le clapet disparaît et, sous l'effet de la pression de l'eau d'alimentation, le clapet se referme en entraînant dans son mouvement celui des tringles et, par suite, le retour du récipient en position haute.

On comprendra que, ce faisant, le récipient ne joue nullement le rôle d'un flotteur puisque lorsque le réservoir se remplit, le volume interne du récipient est lui aussi empli d'un liquide de même densité que celui de liquide dans lequel il baigne.

Dans une forme d'exécution préférée de l'invention, les moyens d'acheminement de l'eau plongent dans le récipient jusqu'au dessous du niveau minimal de remplissage.

Cela évite des bruits de fonctionnement.

L'insonorisation est encore améliorée en prévoyant à l'intérieur des moyens d'acheminement, un manchon souple qui double lesdits moyens d'acheminement jusqu'en aval de prises d'air prévues dans lesdits moyens et qui est capable de se dilater ou de se recroqueviller sur lui-même selon le signe de la pression à laquelle est soumis son espace intérieur.

Outre son effet sur l'insonorisation, ce manchon sert de valve sur les prises d'air lors du remplissage par suite de sa dilatation sous l'effet de la pression d'eau d'alimentation, ainsi que de clapet anti-retour d'eau vers le réseau par suite de son recroquevillement sur lui-même sous l'effet de la dépression qui peut survenir, depuis ledit réseau.

De préférence, le clapet est au moins en partie tronconique et il est logé dans un espace cylindrique entre un siège et un piston soumis à une poussée élastique en direction du clapet. En position d'ouverture, l'une des génératrices de la partie tronconique du clapet est appliquée contre la surface définissant l'espace cylindrique tandis que, en position de fermeture, la grande base de la partie tronconique du clapet prend appui sur le siège, le point de contact entre ladite génératrice et le siège demeurant inchangé à tout moment du déplacement du clapet et formant donc pivot.

Ce point pivot est immuable et fonction de la première position de fonctionnement qu'on lui a donnée lors de l'installation et la fonction du piston est de maintenir constamment le contact entre le clapet et le siège au niveau du point pivot.

On comprend que le clapet est ainsi maintenu à tout moment sur trois points (siège, espace cylindrique, piston) ce qui rend indéréglable le niveau de l'eau dans le réservoir, même en cas d'usure du siège.

Pour permettre le passage de l'eau, le piston est un piston creux et à parois ajourées.

L'espace cylindrique est défini par un passage ménagé dans un corps de montage dudit dispositif sur le réservoir de chasse, ledit passage étant susceptible d'être raccordé au réseau d'alimentation en eau et renfermant, de l'amont vers l'aval, un réducteur de débit, le ressort, le piston et le clapet, ledit ressort s'appuyant sur ledit réducteur pour exercer sa poussée sur ledit piston en direction du point pivot.

Selon une première forme d'exécution de l'invention, la paroi du passage est cannelée dans la zone de déplacement du piston creux et du clapet, pour permettre le passage de l'eau en position ouverte du clapet.

On peut également utiliser un passage à parois non cannelées en ayant recours à un clapet de conception appropriée. Ainsi, le clapet peut revêtir la forme de deux troncs de cône accolés par leur grande base de mêmes dimensions, auquel cas l'une des génératrices de l'un des troncs de cône, dit principal, est appliquée contre la surface définissant l'espace cylindrique, tandis qu'en position de fermeture la petite base de l'autre tronc de cône dit secondaire prend appui sur le siège, et la paroi latérale du tronc de cône secondaire est cannelée pour permettre le passage de l'eau en position ouverte du clapet.

L'invention sera mieux comprise à la lecture de la description ci-après faite en référence aux dessins annexés dans lesquels :

- la figure 1 est une vue schématique montrant un réservoir de chasse d'eau équipé du dispositif selon l'invention en phase de remplissage,

- la figure 2 représente à plus grande échelle le dispositif de la figure 1 en phase de remplissage,

- la figure 3 est une coupe selon la ligne III-III de la figure 2,

- la figure 4 est une vue isométrique du piston utilisé dans la forme d'exécution de la figure 2,

- la figure 5 est une vue similaire à la figure 2, mais en phase de fermeture,

- la figure 6 montre une autre forme d'exécution possible pour le clapet,

- la figure 7 est une coupe selon la ligne VII-VII de la figure 6,

- les figures 8a-8e illustrent schématiquement le fonctionnement du dispositif selon l'invention, et

- la figure 9 est une variante d'exécution préférée du dispositif selon l'invention.

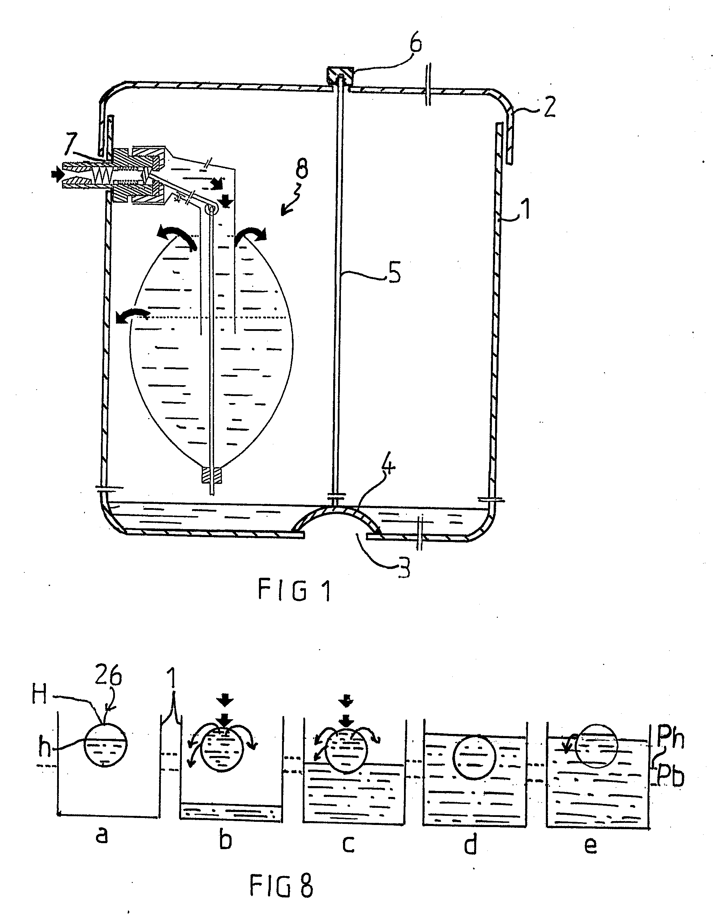

Si l'on se réfère aux figures 1 à 3, on voit un réservoir de chasse d'eau 1 muni d'un couvercle 2 et dont l'orifice de vidange 3 est coiffé d'un obturateur 4 susceptible d'être soulevé par une tige 5 munie d'une poignée 6.

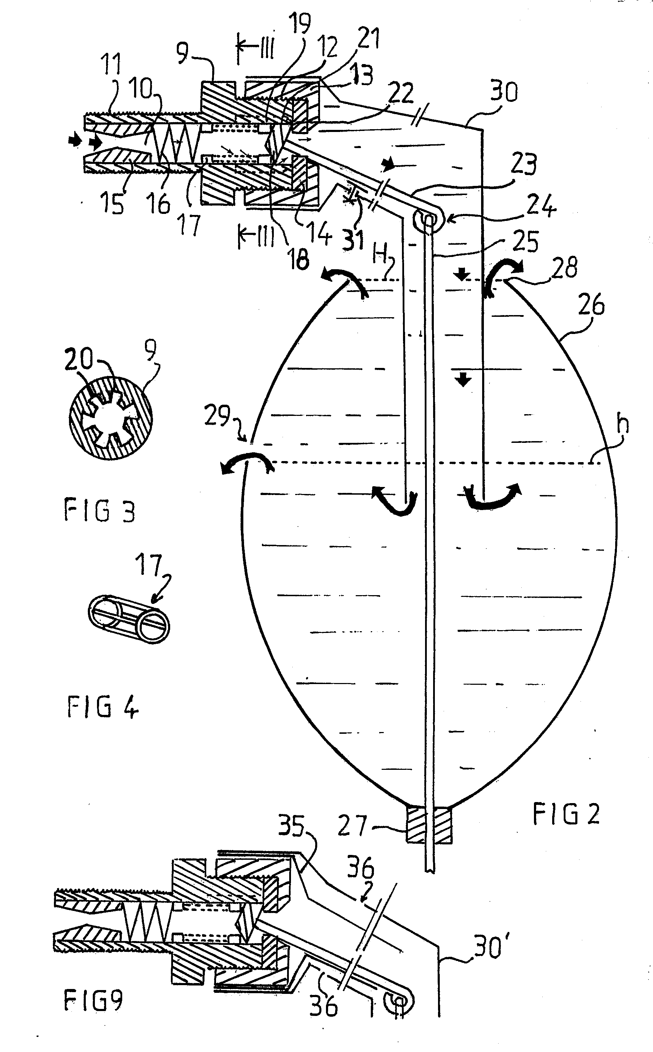

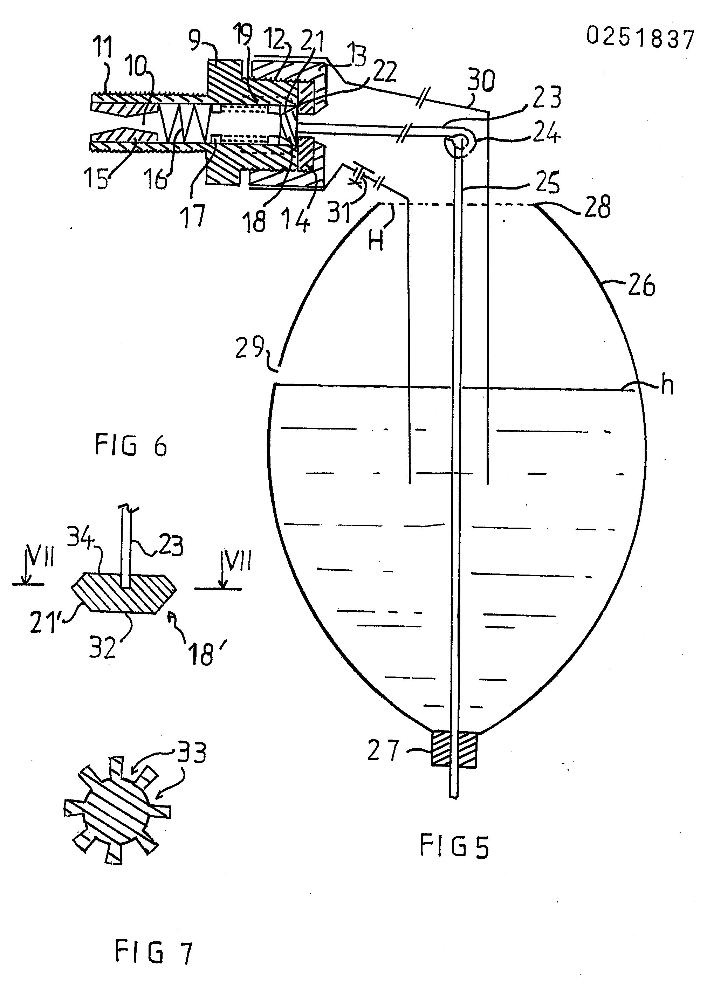

Le réservoir 1 présente en outre un accès 7 pour le branchement au réseau d'alimentation générale en eau. Le dispositif selon l'invention, désigné dans son ensemble par 8, est représenté en position de remplissage aux figures 1 et 2 et en position de fermeture à la figure 5. Si l'on examine maintenant la figure 2 qui représente le dispositif selon l'invention, dans son état de la figure 1 avec davantage de détails, on voit qu'il comporte un corps 9 dans lequel est ménagé un passage 10. Le corps 9 présente un premier filetage 11 adapté à recevoir un contre-écrou non représenté et à être raccordé avec le réseau d'alimentation en eau, et un deuxième filetage 12 adapté à recevoir un raccord 13 avec interposition d'un siège 14 de clapet.

Dans le passage 10 sont logés, de l'amont à l'aval, un réducteur de débit 15, un ressort 16, un piston creux et ajouré 17 et un clapet 18.

Le réducteur de débit a pour but de freiner la vitesse du liquide en amont afin de limiter les turbulences dans l'ensemble des organes du dispositif.

Le ressort 16 s'appuie sur le réducteur de débit 15 pour repousser le piston creux et ajouré 17 vers le clapet 18.

La structure du piston creux et ajouré 17 peut être vue avec plus de facilité en se reportant à la figure 4.

Comme on le voit, le clapet 18 est de forme tronconique et l'une de ses génératrices 21 s'applique contre la paroi du passage 10, avec le point de jonction 22 entre cette génératrice 21 et la grande base du tronc de cône en contact avec le siège 14. Ce point 22 est fixe et le déplacement du clapet entre sa position ouverte représentée aux figures 1 et 2 et sa position fermée représentée à la figure 5, se fait autour de ce point qui est donc un point pivot.

Comme on le voit, le clapet 18 est en contact à trois niveaux : contre le siège 14, contre le passage 10 du corps 9 et contre le piston 17.

Le déplacement autour du point fixe pivot 22 est obtenu grâce au piston 17 qui exerce une poussée diagonale sur le clapet 18 du fait que l'alésage interne dudit piston est d'un diamètre légèrement inférieur à celui de la petite base du clapet 18.

Dans la zone occupée par le réducteur de débit 15 et le ressort 16, la paroi du passage 10 est lisse. Par contre, dans la zone 19 de déplacement du piston 17 et du clapet 18, la paroi du passage 10 est cannelée, comme on le voit à la figure 3.

On comprend que la structure creuse et ajourée du piston 17 et les cannelures 20 du corps 9 permettent le passage de l'eau par l'ouverture du siège 14 lorsque le clapet est dans la position représentée.

Le clapet 18 est solidaire de l'extrémité d'une tige 23 dont l'autre extrémité est articulée en 24 avec une tige 25 supportant un récipient 26. Le récipient est bloqué sur la tige 25 à l'aide d'un organe d'arrêt étanche 27 que l'on peut faire éventuellement coulisser à force le long de la tige 25 pour régler en hauteur la position du récipient 26 sur cette tige.

Le récipient 26 est ouvert à son extrémité supérieure 28 qui définit un niveau maximum de remplissage H et il comporte un orifice de fuite 29 qui définit un niveau minimum h de remplissage. Un conduit rigide 30 monté sur le raccord 5 pénètre dans le récipient 26 jusqu'à un niveau inférieur au niveau h. Comme on le voit, le système de tringles 23, 25 est logé dans le conduit 30.

Il est prévu un organe anti-syphon 31 sur ce conduit 30.

Au lieu d'être rigide, le conduit 30 pourrait être souple auquel cas il serait inutile de lui donner une forme adaptée à autoriser le décalage en hauteur et vers la droite (selon la figure 5) du système de tringles 23, 24, 25. Un tel conduit souple 30', représenté dans la variante d'exécution de la figure 9, suivrait en effet les mouvements dudit système.

Par ailleurs, au lieu de l'organe anti-syphon 31, on pourrait avantageusement utiliser un manchon en matériau souple 35 (figure 9) interposé entre le conduit 30' et le système de tringles, en prévoyant en outre deux prises d'air 36 dans ledit conduit 30'.

Ce manchon souple 35 est capable de se déformer en se dilatant et en venant obturer les prises d'air 36 lorsque l'eau est admise dans le conduit 30 et en se recroquevillant sur lui-même pour interdire le retour d'eau vers le réseau, lorsqu'une dépression se produit depuis ledit réseau.

Le fonctionnement du dispositif selon l'invention va maintenant être décrit en se référant aux figures 1, 2, 5 et 8.

On partira de la figure 8a qui illustre une situation qui n'existe pas, en fait, dans la réalité car il s'y substitue immédiatement la situation de la figure 8b. Le réservoir 1, schématisé par un rectangle, est vide et le récipient 26, schématisé par une sphère, est rempli d'eau jusqu'au niveau h. Le poids du récipient, en position basse Pb, et du volume d'eau v correspondant exercent, par l'intermédiaire de la tige 35, une traction sur la tige 23 et il s'ensuit le pivotement du clapet 18 autour du point fixe 22, depuis sa position illustrée à la figure 5 à la position illustrée à la figure 2, ce à l'encontre de la pression de l'eau provenant du réseau d'alimentation générale. On se trouve alors dans la situation des figures 1, 2 et 8b : l'eau est admise dans le récipient 26 jusqu'au niveau H avec débordement par l'extrémité supérieure 28 du récipient et par fuite par l'orifice 29.

Le réservoir 1 se remplit progressivement (figure 8c) en exerçant peu à peu une poussée d'Archimède sur le récipient. Il advient finalement (figure 8d) que cette poussée d'Archimède est égale au poids du récipient et du volume V d'eau contenue dans ce dernier jusqu'au niveau H. A ce stade, la traction exercée par le poids du récipient et de son contenu sur la tige 23, par l'intermédiaire de la tige 25 devient nulle ou en tout cas inférieure à la pression exercée par l'eau provenant du circuit d'alimentation, qui repousse alors le clapet 18 contre son siège 14. Le pivotement du clapet 18 autour du point 22 entraîne la fermeture de l'alimentation et la remontée instantanée de la tige 23, et par suite celle de la tige 25 et du récipient 26 qui passe en position haute Ph.

Le volume d'eau contenu dans le récipient 26 au-dessus de l'orifice 29 se vide alors dans le réservoir (figure 8e), ce qui évite une traction permanente sur la tringlerie.

Lorsque la chasse est actionnée, on revient à la situation instantanée 8a, à laquelle se substitue immédiatement la situation 8b.

Le fait qu'au moment de la fermeture, le siège 14, le corps 9 et le clapet 18 soient étroitement liés les uns aux autres évite toute sorte d'effets gênants (vibration, coup de bélier, sifflement, etc ...). Un léger bombage sur la couronne intérieure du siège souple 14 est provoqué par la libération en sortie de serrage de la couronne extérieure dudit siège 14 ce qui permet d'évincer complètement les nuisances précitées. C'est l'application du clapet 18 sur le siège 14, aidée par la pression de l'eau, qui provoque l'étanchéité du système en position de fermeture.

Diverses modifications peuvent être apportées à l'exécution du dispositif selon l'invention. Ainsi, au lieu d'être simplement tronconique, le clapet 18 pourrait être bitronconique, comme l'est le clapet 18' de la figure 6. Ce clapet est constitué de deux troncs de cône accolés par leur grande base et, tandis que l'une des génératrices 21' vient, en position ouverte du clapet, s'appliquer contre la paroi du passage 10, en position de fermeture, la petite base 34 de l'autre tronc de cône vient s'appliquer sur le siège 14. Dans le cas du clapet 26', comme le montre la coupe de la figure 7, la paroi latérale du tronc de cône ayant la petite base 32 est cannelée selon 33. En utilisant un tel clapet, il n'est pas nécessaire de prévoir des cannelures 20 dans le corps définissant le passage 10.

On comprendra que, dans tous les cas, l'eau de remplissage arrive dans le réservoir par ruissellement sur le récipient 26, par débordement en 28, et par ruissellement sur la paroi du réservoir projeté en eau morte par l'orifice 29.

Comme il ressort de la description ci-dessus, le dispositif selon l'invention est de fabrication simple, donc peu coûteuse, et facile à dépanner. Il offre des ouvertures internes importantes permettant un remplissage rapide. Il utilise un siège de clapet tout à fait commun et auquel on peut avoir accès sans outil.

En cas de fuite légère par l'orifice de vidange du réservoir, le clapet reste en position de fermeture tant que le niveau de l'eau dans le réservoir n'a pas baissé au point d'entraîner le passage du récipient de sa position haute à sa position basse. Il s'ensuit que le réajustage éventuel de niveau se fait, si nécessaire, d'un coup et non par alimentation continue, comme c'est le cas dans les systèmes à flotteur.

## Revendications

1- Dispositif de remplissage et de fermeture hydraulique pour réservoir (1) de chasse d'eau, comprenant des moyens de raccordement (9, 11) au réseau d'alimentation en eau, des moyens d'acheminement (30) de l'eau vers le réservoir (1), un clapet (18, 18') interposé entre les moyens de raccordement (9, 11) et les moyens d'acheminement (30) et des moyens de déplacement (23, 25, 24) dudit clapet (18) entre une position d'ouverture et une position de fermeture, et réciproquement, caractérisé en ce que lesdits moyens de déplacement sont constitués par un couple de tringles (23, 25) articulées entre elles et dont l'extrémité opposée à l'articulation (24) porte, pour l'une des tringles (23), le clapet (18) et, pour l'autre (25), un récipient (26) ouvert à sa partie supérieure (28) et mobile entre une position haute et une position basse, et réciproquement, le passage de l'une à l'autre position entraînant, par l'intermédiaire du couple de tringles articulé (23, 25) la fermeture et l'ouverture du clapet (18) et réciproquement, les moyens d'acheminement (30) plongeant dans le récipient (26), de sorte que le réservoir (1) est rempli principalement par débordement dudit récipient (26) et accessoirement par un orifice de fuite (29) prévu à une hauteur intermédiaire du récipient (26), correspondant à un niveau de remplissage minimal (h) de ce dernier, le passage de la position basse à la position haute de récipient (26) résultant de l'atteinte de l'équilibre entre la poussée d'Archimède exercée sur celui-ci par l'eau recueillie dans le réservoir (1) et le poids du récipient (26) rempli d'eau, et le passage de la position haute à la position basse du récipient résultant de la vidange du réservoir (1) et de la vidange partielle du récipient (26) jusqu'au niveau (h) de son orifice de fuite (29).

2- Dispositif selon la revendication 1, caractérisé en ce que les moyens d'acheminement (30) plongent dans le récipient (26) jusqu'au-dessous du niveau minimal (h) de remplissage.

3- Dispositif selon la revendication 1 ou 2, caractérisé en ce que le clapet (18, 18') est au moins en partie tronconique et en ce qu'il est logé dans un espace cylindrique entre un siège (14) et un piston (17) soumis à une poussée élastique en direction du clapet (18, 18'), et en ce que, en position d'ouverture, l'une des génératrices (21) de la partie tronconique du clapet (18) est appliquée contre la surface définissant l'espace cylindrique tandis que, en position de fermeture, la grande base (34) de la partie tronconique du clapet (26) prend appui sur le siège (14), le point de contact (22) entre ladite génératrice (21) et le siège (14) demeurant inchangé à tout moment du déplacement du clapet (26) et formant donc pivot.

4- Dispositif selon la revendication 3, caractérisé en ce que le piston (17) exerce une poussée diagonale sur ledit clapet (18, 18') de manière à garantir l'immuabilité du point pivot (22).

5- Dispositif selon la revendication 3 ou 4, caractérisé en ce que le piston (17) est un piston creux et à parois ajourées.

6- Dispositif selon l'une quelconque des revendications 3 à 5, caractérisé en ce que l'espace cylindrique est défini par un passage (10) ménagé dans un corps de montage (9) dudit dispositif sur le réservoir (1) de chasse d'eau, ledit passage étant susceptible d'être raccordé au réseau d'alimentation en eau et renfermant, de l'amont à l'aval, un réducteur de débit (15), le ressort (16), le piston (17) et le clapet (18), ledit ressort (16) s'appuyant sur ledit réducteur (10) pour exercer sa poussée sur ledit piston (18).

7- Dispositif selon les revendications 5 et 6 considérées conjointement, caractérisé en ce que la paroi du passage (10) est cannelée (20) dans la zone de déplacement du piston creux (17) et du clapet (18) pour permettre le passage de l'eau en position ouverte du clapet (18).

8- Dispositif selon l'une quelconque des revendications 1 à 7, caractérisé en ce que le clapet (18') revêt la forme de deux troncs de cône accolés par leur grande base de mêmes dimensions, en ce que l'une des génératrices (21') de l'un des troncs de cône, dit principal, est appliquée contre la surface définissant l'espace cylindrique, tandis qu'en position de fermeture, la petite base (32) de l'autre tronc de cône, dit secondaire, prend appui sur le siège (14), et en ce que la paroi latérale du tronc de cône secondaire est cannelée (33) pour permettre le passage de l'eau en position ouverte du clapet.

9- Dispositif selon l'une quelconque des revendications 1 à 8, caractérisé en ce qu'il comporte à l'intérieur des moyens d'acheminement (30'), un manchon souple (35) qui double lesdits moyens d'acheminement (30') jusqu'en aval de prises d'air (36) prévues dans lesdits moyens et qui est capable de se dilater ou de se recroqueviller sur lui-même selon le signe de la pression à laquelle est soumis son espace interne.

10- Dispositif selon la revendication 9, caractérisé en ce que ledit manchon (35) sert à la fois de valve sur les prises d'air (36) lors du remplissage par suite de sa dilatation sous l'effet de la pression d'eau d'alimentation et de clapet anti-retour d'eau vers le réseau par suite de son recroquevillement sur lui-même sous l'effet de la dépression qui peut survenir depuis ledit réseau.

0251837

FIG 1

FIG 8

0251837

FIG 3

FIG 4

FIG 2

FIG 9

0251837

FIG 6

FIG 5

FIG 7